# EUROPÄISCHE PATENTSCHRIFT

(11) **EP 3 350 017 B1**
(45) Veröffentlichungstag und Bekanntmachung des Hinweises auf die Patenterteilung: **12.02.2020**
(21) Anmeldenummer: 16766003.4
(22) Anmeldetag: 15.09.2016
(51) Int. Cl.: B60N 2/80

(54) **KOPFSTÜTZE FÜR EINEN FAHRZEUGSITZ UND SYSTEM ZUR BILDUNG EINER IN EINE KOPFSTÜTZE INTEGRIERBAREN AUSRICHTUNGSVORRICHTUNG**
HEADREST FOR A VEHICLE SEAT AND SYSTEM FOR FORMING AN ALIGNMENT DEVICE WHICH CAN BE INTEGRATED IN A HEADREST
APPUIE-TÊTE CONÇU POUR UN SIÈGE DE VÉHICULE ET SYSTÈME POUR FORMER UN DISPOSITIF D'ORIENTATION INTÉGRABLE DANS UN APPUIE-TÊTE

(30) Priorität: 15.09.2015 DE 102015217631
(43) Veröffentlichungstag der Anmeldung: 25.07.2018
(73) Patentinhaber: Adient Luxembourg Holding S.à r.l., 1855 Luxembourg (LU)
(72) Erfinder: DILLINGER, Thomas, 40880 Ratingen (DE)
(74) Vertreter: Loock, Jan Pieter
(86) Internationale Anmeldenummer: PCT/EP2016/071803
(87) Internationale Veröffentlichungsnummer: WO 2017/046233

(56) Entgegenhaltungen:
- EP-A1- 2 141 046
- EP-A2- 1 985 493
- WO-A1-2011/032702

## Beschreibung

### Stand der Technik

Die Erfindung betrifft eine Kopfstütze für einen Fahrzeugsitz und ein modulares System zur Bildung einer in eine Kopfstütze integrierbaren Ausrichtungsvorrichtung.

Kopfstützen für Fahrzeugsitze sind hinlänglich bekannt und dienen in einer Unfallsituation unter anderem der Vermeidung einer Halswirbelüberstreckung bei einem Passagier. Zu diesem Zweck und zur Realisierung einer Komfortstellung ist es daher zweckdienlich, wenn sich die Kopfstütze abhängig von der Körpergröße des jeweiligen Passagiers individuell positionieren und arretieren lässt. Aus dem Stand der Technik sind Ausrichtungsvorrichtungen bekannt, mit deren Hilfe sich die Kopfstütze bewegen lässt. Mittels der Ausrichtungsvorrichtung wird beispielsweise eine Translationsbewegung in eine Richtung oder in mehrere voneinander unabhängige Richtungen gestattet, um die gepolsterte Kopfstütze möglichst optimal für den Passagier zu positionieren. Eine gattungsgemässe Kopfstütze und ein gattungsgemässes System zur Bildung einer in einer solchen Kopfstütze integrierbaren Ausrichtungsvorrichtung sind aus EP2141046 bekannt.

### Offenbarung der Erfindung

Es ist eine Aufgabe der vorliegenden Erfindung Kopfstützen gegenüber dem Stand der Technik, beispielweise in Hinblick auf ihre Handhabe, weiter zu verbessern.

Die vorliegende Erfindung löst die Aufgabe durch eine Kopfstütze mit den Merkmalen des Anspruchs 1.

Gegenüber dem Stand der Technik umfasst die erfindungsgemäße Kopfstütze das elastische Bauteil, dessen Rückstellkraft bzw. Federwirkung für eine Stabilisierung der positionierten und arretierten Kopfstütze sorgt. Beispielsweise führt die Federwirkung des elastischen Bauteils dazu, dass die Komponenten der Kopfstütze in der ersten Rastposition gegeneinandergepresst werden, wenn es sich bei der ersten Rastposition um eine Endstellung für die Kopfstütze handelt. Außerdem verursacht das elastische Bauteil durch seine elastische Wirkung ein bestimmtes Einrastgefühl, wenn die Endstellung erreicht wird. Weiterhin dient das elastische Bauteil in vorteilhafter Weise der Rückführung der Kopfstütze, wenn in der zweiten Rastposition eine äußere Kraft auf die Kopfstütze einwirkt, ohne dass eine Verstellung der Kopfstütze erwünscht ist.

Vorzugsweise handelt es sich bei der Translationsbewegung um eine Bewegung, mit der die Kopfstütze entlang einer parallel zur Fahrtrichtung verlaufenden Richtung verschoben wird. Dabei handelt es sich insbesondere bei der ersten Rastposition um eine Endstellung und bei der zweiten Rastposition um eine individuell durch den Passagier festgelegte Stellung der Kopfstütze. Weiterhin ist es vorzugsweise vorgesehen, dass das elastische Bauteil die Welle umfasst bzw. umgreift und die elastische Wirkung durch ein teilweises Verdrehen des Bauteils in Richtung einer Drehrichtung der Welle verursacht wird.

Vorteilhafte Ausgestaltungen und Weiterbildungen der Erfindung sind den Unteransprüchen, sowie der Beschreibung unter Bezugnahme auf die Zeichnungen entnehmbar.

Gemäß der vorliegenden Erfindung ist vorgesehen, dass die Kopfstütze eine Ausrichtungsvorrichtung umfasst, wobei die Ausrichtungsvorrichtung eine Translationseinheit für die Translationsbewegung entlang einer Primärrichtung und/oder eine weitere Translationseinheit für eine weitere Translationsbewegung entlang einer Sekundärrichtung umfasst. Dadurch lässt sich die Kopfstütze in vorteilhafter Weise sowohl nach oben und unten als auch nach vorne und nach hinten bewegen bis die optimale Stellung der Kopfstütze erreicht wird. Vorzugsweise verlaufen die Primärrichtung und die Sekundärrichtung senkrecht zueinander. Weiterhin ist es vorgesehen, dass die Ausrichtungsvorrichtung modular zusammensetzbar ist und dabei beispielsweise wahlweise eine motorisch angetriebene oder manuell betreibbare Translationseinheit und eine motorisch angetriebene oder manuell betreibbare weitere Translationseinheit aufweist. Dadurch lässt sich die Ausrichtungsvorrichtung in vorteilhafter Weise in verschiedene Modelle von Kopfstützen in unterschiedlichen Varianten integrieren.

Gemäß einer weiteren Ausführungsform der vorliegenden Erfindung ist vorgesehen, dass die Translationseinheit zur manuellen Durchführung der Translationsbewegung und/oder die weitere Translationseinheit zur manuellen Durchführung der weiteren Translationsbewegung ausgestaltet ist.

Gemäß einer weiteren Ausführungsform der vorliegenden Erfindung ist vorgesehen, dass die Translationseinheit zur motorisch angetriebenen Durchführung der Translationsbewegung und/oder die weitere Translationseinheit zur motorisch angetriebenen Durchführung der weiteren Translationsbewegung ausgestaltet ist. Dadurch lässt sich die Kopfstütze in vorteilhafter Weise bequem verschieben. Insbesondere ist es vorgesehen, dass ein für motorischen Antrieb vorgesehener Antrieb mit der Welle bzw. einer weiteren Welle der weiteren Translationseinheit verbunden ist und die entsprechende Welle antreibt.

Gemäß einer weiteren Ausführungsform der vorliegenden Erfindung ist vorgesehen, dass das elastische Bauteil konusförmig ausgestaltet ist. Durch diese Form des elastischen Bauteils lässt sich die Rückstellkraft bzw. Federwirkung des elastischen Bauteils in vorteilhafter anpassen, beispielsweise an die geometrischen Rahmenbedingungen für die Wechselwirkung zwischen dem Rastelement und der Welle.

Gemäß der vorliegenden Erfindung ist vorgesehen, dass die Translationseinheit ein Getriebe zur Übersetzung der Translationsbewegung in eine Drehbewegung der Welle aufweist, wobei das Getriebe vorzugsweise ein Zahnrad und ein schwenkbares Scheibenelement (auch als Scheibensegment bezeichnet) mit einer Verzahnung aufweist.

Gemäß der vorliegenden Erfindung ist vorgesehen, dass die weitere Translationseinheit ein Getriebe zur Übersetzung der Translationsbewegung in eine Drehbewegung der weiteren Welle aufweist, wobei das Getriebe der weiteren Translationseinheit vorzugsweise ein weiteres Zahnrad und eine Zahnstange aufweist.

Gemäß einer weiteren Ausführungsform der vorliegenden Erfindung ist vorgesehen, dass die Welle einen Spannstift umfasst oder ein Spannstift in der Verlängerung der Welle angeordnet ist. Es hat sich in überraschender und für den Fachmann in nicht zu erwartender Weise gezeigt, dass mittels des Spannstifts das Einrastgefühl vorteilhafterweise beeinflusst werden kann.

Ein weiterer Gegenstand der vorliegenden Erfindung ist ein modulares System zur Bildung einer in eine Kopfstütze integrierbare Ausrichtungsvorrichtung, für eine erfindungsgemäße Kopfstütze, wobei das System
-- eine Translationseinheit zur reversiblen Überführung der Kopfstütze zwischen einer ersten Rastposition und einer zweiten Rastposition und
-- eine Übersetzungseinheit zur Übersetzung der Translationsbewegung in eine Drehbewegung einer Welle, die über ein elastisches Element mit einem in der ersten Rastposition und der zweiten Rastposition einrastenden Rastelement verbunden ist,
aufweist. Vorzugsweise umfasst die Übersetzungseinheit ein Getriebe umfassend ein Zahnrad, ein schwenkbares Scheibensegment mit Verzahnung und/oder eine Zahnstange.

Gemäß einer weiteren Ausführungsform der vorliegenden Erfindung ist vorgesehen, dass das modulare System eine weitere Translationseinheit aufweist, wobei die Translationseinheit und/oder die weitere Translationseinheit manuell betreibbar ist oder einen motorischen Antrieb aufweist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

Die **Figur 1** zeigt eine Kopfstütze für ein Fahrzeug gemäß einer ersten beispielhaften Ausführungsform der vorliegenden Erfindung.
Die **Figur 2** zeigt eine Kopfstütze für ein Fahrzeug gemäß einer zweiten beispielhaften Ausführungsform der vorliegenden Erfindung.
Die **Figur 3** zeigt eine Kopfstütze für ein Fahrzeug gemäß einer dritten beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

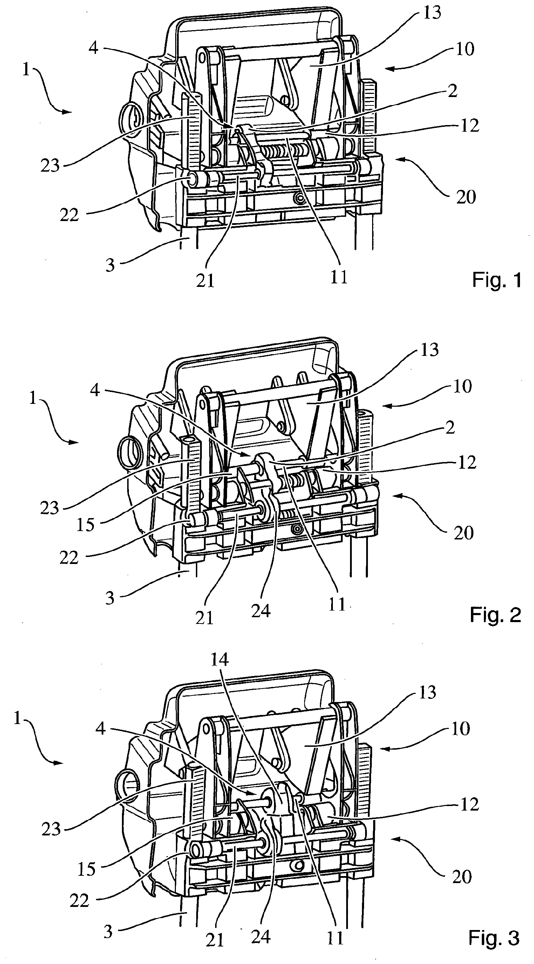

In **Figur 1** ist schematisch eine Kopfstütze für einen Fahrzeugsitz, gemäß einer ersten beispielhaften Ausführungsform der vorliegenden Erfindung dargestellt. Dabei ist die Kopfstütze dazu vorgesehen, einem Passagier einerseits ein komfortables Abstützen seines Kopfes zu ermöglichen und andererseits den Passagier in einer Unfallsituation vor Überdehnung seines Halswirbels und möglichweise einem damit einhergehenden Schädel-Hirn-Trauma bzw. Nervenschäden zu schützen. Für eine flexibel einstellbare und stabile Positionierung der Kopfstütze umfasst sie vorzugsweise eine Ausrichtungsvorrichtung 1, mit deren Hilfe die Kopfstütze gegenüber einem Grundkörper, insbesondere einer Rückenlehne, des Fahrzeugsitzes positionierbar ist. Um die Kopfstütze möglichst optimal zum Kopf des Passagiers zu positionieren, ist es vorzugsweise vorgesehen, dass die Ausrichtungsvorrichtung 1 eine Translationseinheit 10 und/oder eine weitere Translationseinheit 20 aufweist, wobei die Translationseinheit 10 für eine Translationsbewegung der Kopfstütze entlang einer Primärrichtung, insbesondere entlang einer horizontal verlaufenden Richtung, d. h. einer Z-Richtung, und die weitere Translationseinheit 20 für eine weitere Translationsbewegung der Kopfstütze entlang einer Sekundärrichtung, insbesondere entlang einer vertikal verlaufenden Richtung, d. h. X-Richtung, ausgestaltet ist. Insbesondere verlaufen die Primärrichtung und die Sekundärrichtung senkrecht zueinander. Dabei lässt sich vorzugsweise mittels der Translationseinheit 10 eine Bewegung der Kopfstütze in Richtung des Kopfes des Passagiers und mittels der weiteren Translationseinheit 20 ein Höhenversatz der Kopfstütze realisieren. Weiterhin ist es bevorzugt vorgesehen, dass sich mittels der Translationseinheit 10 und/oder der weiteren Translationseinheit 20 die Kopfstütze zwischen einer ersten Rastposition und einer zweiten Rastposition bewegen lässt. Beispielsweise handelt es sich bei der zweiten Rastposition um die Stellung, die vom Passagier individuell eingestellt wird, und bei der ersten Rastposition eine Stellung, in der die Kopfstütze vollständig zurückgefahren ist. Um die Kopfstütze zu arretieren, ist in der Ausrichtungsvorrichtung 1 ein Rastelement 2, beispielsweise ein Nockenelement, vorgesehen, wobei das Rastelement 2 in der der ersten Rastposition und der zweiten Rastposition eingerastet ist, d. h. formschlüssig und/oder kraftschlüssig mit einem Bauteil der Kopfstütze, insbesondere der Ausrichtungsvorrichtung, zusammenwirkt. Dadurch wird die Kopfstütze in vorteilhafter Weise arretiert. In dem in Figur 1 dargestellten Ausführungsbeispiel ist die Kopfstütze manuell zwischen der ersten und der zweiten Rastposition überführbar. Dazu wird das Rastelement 2 aus der ersten und der zweiten Rastposition gelöst, beispielsweise durch einen Versatz oder ein Anheben des Rastelements 2. Anschließend lässt sich die Kopfstütze durch eine Krafteinwirkung von außen manuell bewegen bzw. verschieben. Insbesondere ist es vorstellbar, dass sich die erste Translationseinheit 10 und die zweite Translationseinheit 20 ein gemeinsames Rastelement 2 teilen. Bei dessen Lösen lässt sich die Kopfstütze dann sowohl entlang der Primärrichtung als auch entlang der Sekundärrichtung jeweils translatorisch bewegen bis die erste oder zweite Rastposition eingenommen wird und das Rastelement wieder einrastet, beispielsweise verursacht durch eine Rückstellkraft eines Federelements. Weiterhin ist es vorgesehen, dass die Translationseinheit 10 eine Welle 11 und/oder die weitere Translationseinheit 20 eine weitere Welle 21 aufweist, wobei sich die Welle 11 bei der Überführung, d. h. bei der Translationsbewegung der Kopfstütze, mitdreht. Für die Übersetzung der Translationsbewegung in eine Drehbewegung der Welle 11 bzw. für die Übersetzung der weiteren Translationsbewegung in eine weitere Drehbewegung der weiteren Welle 21 ist vorzugsweise jeweils ein Getriebe vorgesehen. Im Falle der Translationseinheit 10 umfasst das Getriebe insbesondere ein Zahnrad 12, das vorzugsweise in die Welle 11 integriert bzw. mit der Welle 11 verbunden ist, und ein verschwenkbares Scheibensegment 13 mit Verzahnung. Bei der Translationsbewegung wird das Scheibensegment 13 verschwenkt und treibt über das Getriebe die Welle 11 zur Drehbewegung an. Im Falle der weiteren Translationseinheit 20 umfasst das Getriebe insbesondere ein weiteres Zahnrad 22, das vorzugsweise in die weitere Welle 21 integriert ist bzw. mit der weiteren Welle 21 verbunden ist, und eine Zahnstange 23, die vorzugsweise in ein Trägerelement 3 für die Kopfstütze integriert oder mit dem Trägerelement 3 positionsfest verbunden ist. Bei einem Höhenversatz wird das weitere Zahnrad 22 entlang der Zahnstange 23 bewegt und so die weitere Welle 21 angetrieben. Weiterhin ist es vorstellbar, dass das Rastelement 2 zum Blockieren der Drehbewegung der Welle 11 in der ersten Rastposition bzw. zweiten Rastposition, insbesondere formschlüssig, mit der Welle 11 zusammenwirkt. Gleiches gilt insbesondere auch für die weitere Welle 21 und das gemeinsame Rastelement. Für das Zusammenwirken der Welle 11 bzw. der weiteren Welle 21 mit dem Rastelement 2 ist die Welle und/oder die weitere Welle mit einer, insbesondere entlang einer Längsachse der Welle 11 bzw. der weiteren Welle 21 verlaufenden oder zumindest teilweise umlaufende Kontur versehen. Beispielsweise handelt es sich bei der Kontur um Kanten eines mehrkantigen Zylinders. Weiterhin ist es vorgesehen, dass das Rastelement 2 in der ersten Rastposition und/oder der zweiten Rastposition über ein elastisches Bauteil 4, insbesondere über einen elastischen Konus am Rastelement 2, mit der Welle 11 bzw. der weiteren Welle 21 verbunden ist. Mittels der elastischen Wirkung des elastischen Bauteils 4 lässt sich die Kopfstütze in vorteilhafter Weise in der ersten Rastposition gegen weitere Bauteile des Fahrzeugsitzes, beispielsweise gegen das Trägerelement 4, pressen. Außerdem lässt sich ein Einrastgefühl beim Erreichen einer Endposition der Kopfstütze bewirken. Weiterhin verursacht die Wirkung des elastischen Bauteils 4 eine Rückführung der Kopfstütze in der zweiten Rastposition, sobald äußere Kräfte auf die Kopfstütze einwirken, ohne das eine Überführung in eine andere Rastposition erwünscht ist.

Vorzugsweise ist die Ausrichtvorrichtung 1 modular zusammensetzbar ausgestaltet, um in verschiedenen Modellen von Kopfstützen einsetzbar zu sein. In der in Figur 1 dargestellten Zusammensetzung für die Ausrichtungsvorrichtung 1 sind sowohl die erste Translationseinheit 10 als auch die zweite Translationseinheit 20 für die manuelle Überführung der Kopfstütze vorgesehen.

In **Figur 2** ist schematisch eine Kopfstütze für ein Fahrzeug gemäß einer zweiten beispielhaften Ausführungsform der vorliegenden Erfindung dargestellt. Dabei unterscheidet sich die Kopfstütze aus der Figur 2 zu der in Figur 1 Illustrierten im Wesentlichen nur dadurch, dass in der in Figur 2 dargestellten Zusammensetzung der Ausrichtungsvorrichtung 1 die Translationseinheit 10 zum manuellen Betrieb vorgesehen ist, während die weitere Translationseinheit 20 motorisch antreibbar ist. Dazu ist ein mit der weiteren Welle verbundener weiterer Antrieb 24 vorgesehen. Weiterhin ist ein Spannstift 15 in der Translationseinheit 10, insbesondere als Teil der Welle 11 oder als Verlängerung der Welle 11, vorgesehen. Dadurch lässt sich in vorteilhafter Weise das Einrastgefühle beeinflussen.

In **Figur 3** ist schematisch eine Kopfstütze für ein Fahrzeug gemäß einer dritten beispielhaften Ausführungsform der vorliegenden Erfindung dargestellt. Dabei unterscheidet sich die Kopfstütze aus der Figur 3 zu der in Figur 1 Illustrierten im Wesentlichen nur dadurch, dass in der in Figur 3 dargestellten Zusammensetzung der Ausrichtungsvorrichtung 1 die Translationseinheit 10 und die weitere Translationseinheit 20 motorisch antreibbar sind. Dazu sind ein mit der Welle 11 verbundener Antrieb 14 und der mit der weiteren Welle 21 verbundene weitere Antrieb 24 vorgesehen.

### Bezugszeichenliste

- 1: Ausrichtungsvorrichtung
- 2: Rastelement
- 3: Trägerelement
- 4: Elastisches Bauteil
- 10: Erste Translationseinheit
- 11: Welle
- 12: Zahnrad
- 13: Scheibensegment
- 14: Antrieb
- 15: Spannstift
- 20: Weitere Translationseinheit
- 21: Weitere Welle
- 22: Weiteres Zahnrad
- 23: Zahnstange
- 24: Weiterer Antrieb

## Patentansprüche

1. Kopfstütze für einen Fahrzeugsitz, wobei die Kopfstütze durch eine Translationsbewegung zwischen einer ersten Rastposition und einer zweiten Rastposition reversibel überführbar ist, wobei die Kopfstütze eine sich mit der Translationsbewegung mitdrehende Welle (11) aufweist, wobei die Welle (11) in der ersten Rastposition und in der zweiten Rastposition mit einem Rastelement (2) verbindbar ist, **dadurch gekennzeichnet, dass** das Rastelement (2) über ein elastisches Bauteil (4) mit der Welle (11) verbunden ist, wobei die Kopfstütze eine Ausrichtungsvorrichtung (1) umfasst, wobei die Ausrichtungsvorrichtung (1) eine Translationseinheit (10) für die Translationsbewegung entlang einer Primärrichtung und eine weitere Translationseinheit (20) für eine weitere Translationsbewegung entlang einer Sekundärrichtung umfasst, wobei die Translationseinheit (10) ein Getriebe zur Übersetzung der Translationsbewegung in eine Drehbewegung der Welle (11) aufweist, wobei das Getriebe ein Zahnrad (12) und ein schwenkbares Scheibenelement (13) mit einer Verzahnung aufweist, wobei die weitere Translationseinheit (20) ein Getriebe zur Übersetzung der Translationsbewegung in eine Drehbewegung einer weiteren Welle (21) aufweist, wobei das Getriebe der weiteren Translationseinheit (20) ein weiteres Zahnrad (22) und eine Zahnstange (23) aufweist.

2. Kopfstütze nach Anspruch 1, wobei das elastische Bauteil (4) die Welle (11) umgreift und wobei die Kopfstütze vorzugsweise derart ausgebildet ist, dass die elastische Wirkung durch ein zumindest teilweises Verdrehen des elastischen Bauteils (4) in Richtung einer Drehrichtung der Welle (11) verursacht wird.

3. Kopfstütze nach einem der vorhergehenden Ansprüche, wobei die Translationseinheit (10) zur manuellen Durchführung der Translationsbewegung und/oder die weitere Translationseinheit (20) zur manuellen Durchführung der weiteren Translationsbewegung ausgestaltet ist.

4. Kopfstütze nach einem der vorhergehenden Ansprüche, wobei die Translationseinheit (10) zur motorisch angetriebenen Durchführung der Translationsbewegung und/oder die weitere Translationseinheit (20) zur motorisch angetriebenen Durchführung der weiteren Translationsbewegung ausgestaltet ist.

5. Kopfstütze nach einem der vorhergehenden Ansprüche, wobei das elastische Bauteil (4) konusförmig ausgestaltet ist.

6. Kopfstütze nach einem der vorhergehenden Ansprüche, wobei die Welle (11) einen Spannstift (15) umfasst oder ein Spannstift (15) in der Verlängerung der Welle (11) angeordnet ist.

7. System zur Bildung einer in eine Kopfstütze integrierbaren Ausrichtungsvorrichtung (1)für eine Kopfstütze nach einem der vorhergehenden Ansprüche, wobei das System eine Translationseinheit (10) zur reversiblen Überführung der Kopfstütze zwischen einer ersten Rastposition und einer zweiten Rastposition und eine Übersetzungseinheit zur Übersetzung der Translationsbewegung in eine Drehbewegung einer Welle (11), die über ein elastisches Element (4) mit einem in der ersten Rastposition und der zweiten Rastposition einrastenden Rastelement (2) verbunden ist, aufweist.

8. System nach Anspruch 7, wobei die Übersetzungseinheit ein Getriebe umfassend ein Zahnrad (12, 22), ein schwenkbares Scheibensegment (13) mit Verzahnung und/oder eine Zahnstange (23) umfasst.

9. System nach einem der Ansprüche 7 oder 8, wobei das System eine weitere Translationseinheit (20) aufweist, wobei die Translationseinheit (10) und/oder die weitere Translationseinheit (20) manuell betreibbar ist oder einen motorischen Antrieb (14, 24) aufweist.

## Claims

1. Headrest for a vehicle seat, wherein the headrest is transferable in a reversible manner between a first latching position and a second latching position by way of a movement in translation, wherein the headrest has a shaft (11) that rotates along with the movement in translation, wherein the shaft (11) is connectable to a latching element (2) in the first latching position and in the second latching position, **characterized in that** the latching element (2) is connected to the shaft (11) via an elastic component (4), wherein the headrest comprises an orienting device (1), wherein the orienting device (1) comprises a translation unit (10) for the movement in translation in a primary direction and a further translation unit (20) for a further movement in translation in a secondary direction, wherein the translation unit (10) has a transmission for converting the movement in translation into a rotary movement of the shaft (11), wherein the transmission has a gearwheel (12) and a pivotable disk element (13) with a toothing, wherein the further translation unit (20) has a transmission for converting the movement in translation into a rotary movement of a further shaft (21), wherein the transmission of the further translation unit (20) has a further gearwheel (22) and a rack (23).

2. Headrest according to Claim 1, wherein the elastic component (4) engages around the shaft (11) and wherein the headrest is preferably configured such that the elastic action is brought about by at least partial twisting of the elastic component (4) in the direction of a direction of rotation of the shaft (11).

3. Headrest according to one of the preceding claims, wherein the translation unit (10) is configured for manually carrying out the movement in translation and/or the further translation unit (20) is configured for manually carrying out the further movement in translation.

4. Headrest according to one of the preceding claims, wherein the translation unit (10) is configured for carrying out the movement in translation in a motor-driven manner and/or the further translation unit (20) is configured for carrying out the further movement in translation in a motor-driven manner.

5. Headrest according to one of the preceding claims, wherein the elastic component (4) is configured in a conical manner.

6. Headrest according to one of the preceding claims, wherein the shaft (11) comprises a clamping pin (15) or a clamping pin (15) is arranged in continuation of the shaft (11).

7. System for forming an orienting device (1) that is able to be integrated into a headrest, for a headrest according to one of the preceding claims, wherein the system has a translation unit (10) for reversibly transferring the headrest between a first lacthing position and a second latching position and a conversion unit for converting the movement in translation into a rotary movement of a shaft (11), which is connected via an elastic element (4) to a latching element (2) that latches in the first latching position and the second latching position.

8. System according to Claim 7, wherein the conversion unit comprises a transmission comprising a gearwheel (12, 22), a pivotable disk segment (13) with a toothing, and/or a rack (23).

9. System according to either of Claims 7 and 8, wherein the system has a further translation unit (20), wherein the translation unit (10) and/or the further translation unit (20) is manually operable or has a motorized drive (14, 24).

## Revendications

1. Appuie-tête pour un siège de véhicule, l'appuie-tête pouvant être transféré de manière réversible par un déplacement en translation entre une première position d'encliquetage et une deuxième position d'encliquetage, l'appuie-tête présentant un arbre (11) tournant conjointement avec le mouvement de translation, l'arbre (11), dans la première position d'encliquetage et dans la deuxième position d'encliquetage, pouvant être connecté à un élément d'encliquetage (2), **caractérisé en ce que** l'élément d'encliquetage (2) est connecté à l'arbre (11) par le biais d'un composant élastique (4), l'appui-tête comprenant un dispositif d'orientation (1), le dispositif d'orientation (1) comprenant une unité de translation (10) pour le déplacement en translation le long d'une direction primaire et une unité de translation supplémentaire (20) pour un déplacement en translation supplémentaire le long d'une direction secondaire, l'unité de translation (10) présentant une transmission pour convertir le déplacement en translation en un mouvement de rotation de l'arbre (11), la transmission présentant une roue dentée (12) et un élément de disque pivotant (13) avec une denture, l'unité de translation supplémentaire (20) présentant une transmission pour la conversion du déplacement en translation en un mouvement de rotation d'un arbre supplémentaire (21), la transmission de l'unité de translation supplémentaire (20) présentant une roue dentée supplémentaire (22) et une crémaillère (23).

2. Appui-tête selon la revendication 1, dans lequel le composant élastique (4) vient en prise autour de l'arbre (11) et l'appui-tête étant réalisé de préférence de telle sorte que l'action élastique soit provoquée par une rotation au moins partielle du composant élastique (4) dans la direction d'un sens de rotation de l'arbre (11).

3. Appui-tête selon l'une quelconque des revendications précédentes, dans lequel l'unité de translation (10) est configurée pour réaliser manuellement le déplacement en translation et/ou l'unité de translation supplémentaire (20) est configurée pour réaliser manuellement le déplacement en translation supplémentaire.

4. Appui-tête selon l'une quelconque des revendications précédentes, dans lequel l'unité de translation (10) est configurée pour réaliser par entraînement par moteur le déplacement en translation et/ou l'unité de translation supplémentaire (20) est configurée pour réaliser par entraînement par moteur le déplacement en translation supplémentaire.

5. Appui-tête selon l'une quelconque des revendications précédentes, dans lequel le composant élastique (4) est configuré en forme de cône.

6. Appui-tête selon l'une quelconque des revendications précédentes, dans lequel l'arbre (11) comprend une goupille de serrage (15) ou une goupille de serrage (15) est disposée dans le prolongement de l'arbre (11).

7. Système pour former un dispositif d'orientation (1) pouvant être intégré dans un appui-tête, pour un appui-tête selon l'une quelconque des revendications précédentes, le système présentant une unité de translation (10) pour un transfert réversible de l'appui-tête entre une première position d'encliquetage et une deuxième position d'encliquetage et une unité de conversion pour convertir le déplacement en translation en un mouvement de rotation d'un arbre (11), qui est connecté par le biais d'un élément élastique (4) à un élément d'encliquetage (2) s'encliquetant dans la première position d'encliquetage et dans la deuxième position d'encliquetage.

8. Système selon la revendication 7, dans lequel l'unité de conversion comprend une transmission comprenant une roue dentée (12, 22), un segment de disque pivotant (13) avec une denture et/ou une crémaillère (23) .

9. Système selon l'une quelconque des revendications 7 ou 8, le système présentant une unité de translation supplémentaire (20), l'unité de translation (10) et/ou l'unité de translation supplémentaire (20) pouvant être actionnées manuellement ou présentant un entraînement par moteur (14, 24) .
